# EUROPEAN PATENT SPECIFICATION

(11) **EP 2 459 370 B1**
(45) Date of publication and mention of the grant of the patent: **18.03.2015**
(21) Application number: 10805093.1
(22) Date of filing: 30.07.2010
(51) Int. Cl.: B32B 7/06, B32B 7/12, B32B 27/08, B32B 27/32, B32B 3/02, C09J 7/02

(54) **WALL MOUNTED MULTILAYERED FILM AND METHOD OF USE**
WANDMONTIERTER MEHRSCHICHTIGER FILM UND VERWENDUNGSVERFAHREN
FILM MULTICOUCHE MURAL ET PROCÉDÉ D'UTILISATION

(30) Priority: 31.07.2009 US 230310 P
(43) Date of publication of application: 06.06.2012
(73) Proprietor: Haldon Company, Aurora, Illinois 60505 (US)
(72) Inventor: DONEY, Dennis, Yorkville, Illinois 60560 (US); HALL, Mark, Oswego, Illinois 60543 (US)
(74) Representative: Grünecker, Kinkeldey, Stockmair & Schwanhäusser
(86) International application number: PCT/US2010/043842
(87) International publication number: WO 2011/014734

(56) References cited:
- US-A- 4 443 283
- US-A- 5 201 954
- US-A1- 2003 087 054
- US-A1- 2004 001 932
- US-A1- 2009 117 307
- US-A1- 2010 028 586
- US-B2- 6 777 055
- US-B2- 6 847 492
- DATABASE WPI Week 199733, Derwent Publications Ltd., London, GB; AN 1997-359258 -& JP H09 151 362 A (HONDA DENSHI KK) 10 June 1997

## Description

### BACKGROUND

Spray coating application booths, for example, paint booths, such as those used in industrial manufacturing or automotive repair facilities, are typically enclosed areas into which various paints or other types of surface coatings are applied. Such coatings are typically deposited onto articles by a spray method. Overspray from the coating application process may be deposited onto the various internal surfaces of the paint booth enclosure. Moreover, foreign contaminants such as dirt and dust may enter the enclosure and deposit onto the internal surfaces thereof. In small amounts, these foreign contaminants firmly adhere onto the internal surfaces thereof and typically pose no problem. However, in larger amounts, these foreign contaminants may fragment and become dislodged. Due to turbulence created within the paint booth during the spray application process, such foreign contaminants may detach from the internal surfaces of the booth and deposit onto the article being coated in the booth, thus contaminating or compromising the function and/or appearance of the coating.

It is generally desired to maintain the internal surfaces of a spray coating application booth free of dirt and contaminants to ensure proper coating and avoid contamination of the coatings deposited onto articles within the booth. Known methods for cleaning the internal surfaces of booths include periodic scraping, cleaning and repainting of the walls, ceilings, and floors of the booths to remove accumulated debris and contaminants.

From the prior art US 2003/0087054 A1, US 2004/001932 A1, JP H09 151362 A and US 5,201,954 A devices e.g. for protecting a surface from paint spray in a paint spray booth having a plurality of sheets that can be peeled off after use are known.

### BRIEF SUMMARY OF THE DISCLOSURE

In one aspect, the disclosure describes a multilayer film covering. The multilayer film covering includes a base layer arranged for adhesion to a wall surface. The base layer includes a layer of a wall adhesive disposed in adhesive relationship with a plastic sheet and extending over at least a portion of the plastic sheet. One or more subsequent layer(s) is/are stacked over and adhered to the base layer or to one another to form a stack. Each subsequent layer includes a layer of an adhesive disposed in releasable adhesive relationship with the plastic sheet of the base layer or another underlying layer. The layer of adhesive is further in adhesive relationship with a subsequent plastic sheet. The adhesive layer extends over at least a portion of the subsequent plastic sheet, and is absent along an edge portion of each sheet.

In another aspect, the disclosure describes a method of using a multilayer film covering to line a wall, for example, an internal wall of a paint booth. As the outer layer of the multilayer film covering becomes soiled by paint overspray and/or other contaminants, it is peeled and removed from the stack to reveal a fresh, new layer.

In another aspect, the disclosure describes A multilayer film for covering interior wall surfaces of an enclosure includes a base layer having a layer of wall adhesive configured to provide an adhesive relationship between the base layer and the wall surface. A stack of removable layers is adhered to the base layer. Each removable layer includes a layer of removable adhesive disposed on an inner facing surface of each layer. Adjacent removable layers are adhered to one another by a corresponding layer of removable adhesive that extends over at least a portion of each removable layer such that a flap that is free of the removable adhesive remains along at least two opposite peripheral edges of each removable layer. The outermost layer of the stack may be selectively peeled from the rest to expose a subsequent, clean layer.

### BRIEF DESCRIPTION OF THE SEVERAL VIEWS OF THE DRAWINGS

FIG. 1 is a partial outline view of a multilayered film covering in accordance with the disclosure, which has been installed onto a wall of a paint booth.
FIG. 2 is a section view of two adjacent multilayered film coverings installed onto a wall and having a seam disposed therebetween in accordance with the disclosure.
FIG. 3 is a section view of the two adjacent multilayered film coverings shown in FIG. 2 during an initiation of a film peeling process in accordance with the disclosure.
FIG. 4 is an outline view of a multilayered film covering during installation onto a wall in accordance with one embodiment of the disclosure.
FIG. 5 is an outline view of a multilayered film covering during removal of a film layer in accordance with one embodiment of the disclosure.
FIG. 6 is an outline view of a multilayer film covering dispenser in accordance with the disclosure.
FIG. 7 is a partial outline view of an application tool for a multilayer film covering in accordance with the disclosure.

### DETAILED DESCRIPTION OF A PREFERRED EMBODIMENT

In the description that follows, an exemplary application of a multilayer film covering, which includes the structure of the multilayer film as well as an exemplary method for its use onto internal vertical surfaces of an automotive paint booth, is disclosed. One can appreciate that the multilayer film covering described herein may be applied to other types of enclosures, for example, spraying booths or tunnels applying paint or other types of coatings onto various articles. For example, the booth may be an enclosed space or may be formed as a tunnel around a continuous conveyor carrying articles to be coated or painted. Other examples of suitable enclosures include clean-room areas in manufacturing facilities for electronics or other devices, rooms requiring sanitary conditions such as surgical facilities, and other types of enclosures. One exemplary use of the multilayered film coating is illustrated herein to highlight the structural features of the multilayered film coating and to provide a method for its use. The disclosed embodiments represent general aspects of use of the disclosed multilayer film as a protective wall covering that can be peeled to provide a subsequent layer of clean wall surface in a short period.

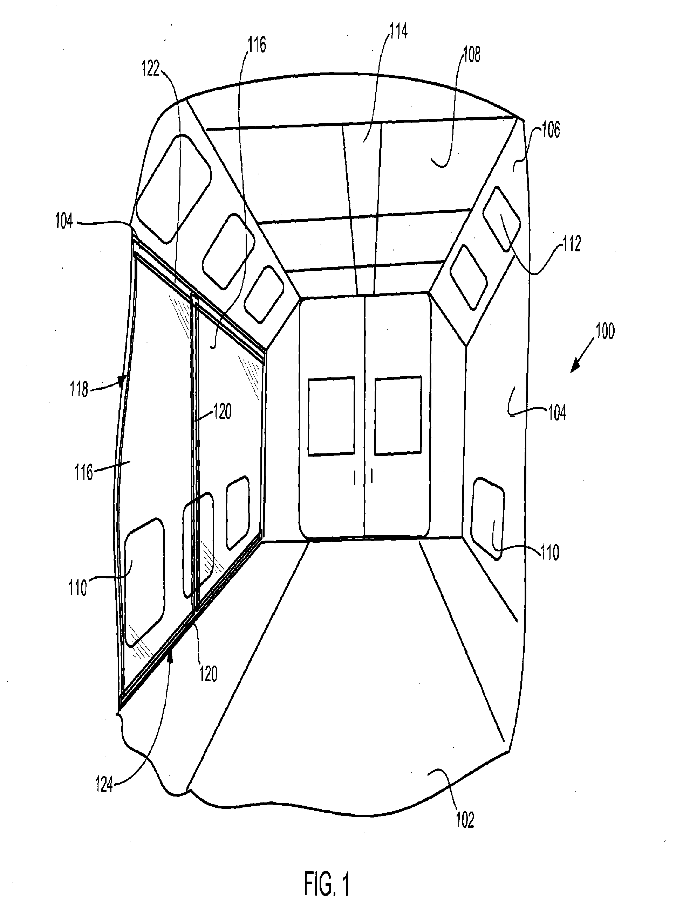

FIG. 1 is a partial outline view of the interior of a paint booth 100. The paint booth 100 is of the type used by automotive painting and repair facilities to spray-paint automobiles. The booth 100 is an enclosed space at least partially defined by a floor surface 102, a lower wall surface 104, an inclined wall surface 106, and a ceiling surface 108. The booth 100 further includes lower light-boxes 110 integrated with the lower wall surface 104, upper light-boxes 112 installed in the inclined wall surfaces 106, and ceiling light fixtures 114, which collectively illuminate the interior of the booth 100 during the painting process.

In the illustration of FIG. 1, two multilayer film coverings 116 have been installed onto one of the lower wall surfaces 104. Multilayer film coverings 116 may be installed on both or all lower wall surfaces of a booth, as well as onto other interior surfaces of the booth that may become contaminated, such as the inclined walls 106 and the ceiling.

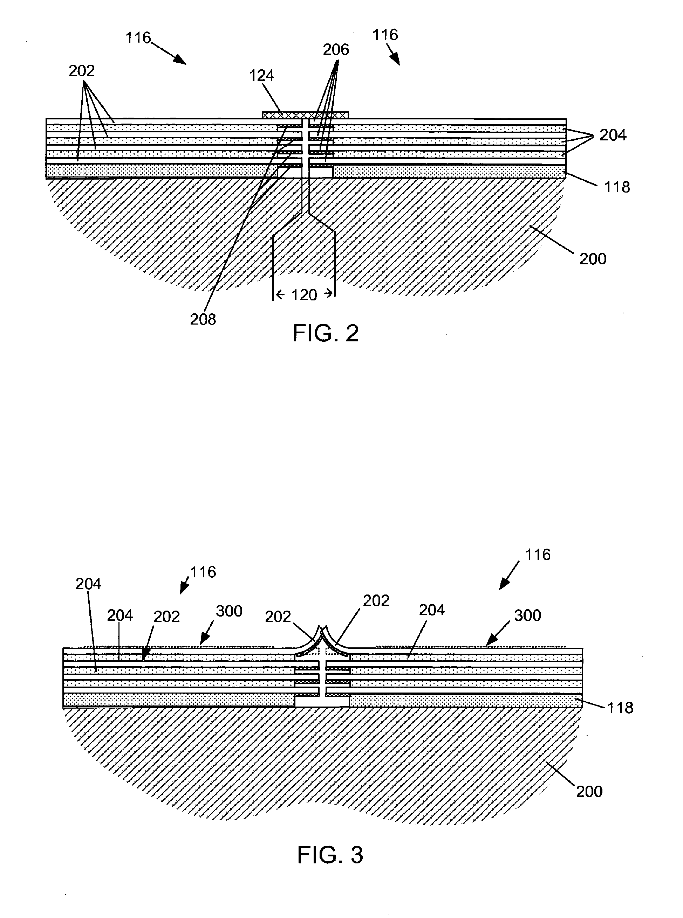

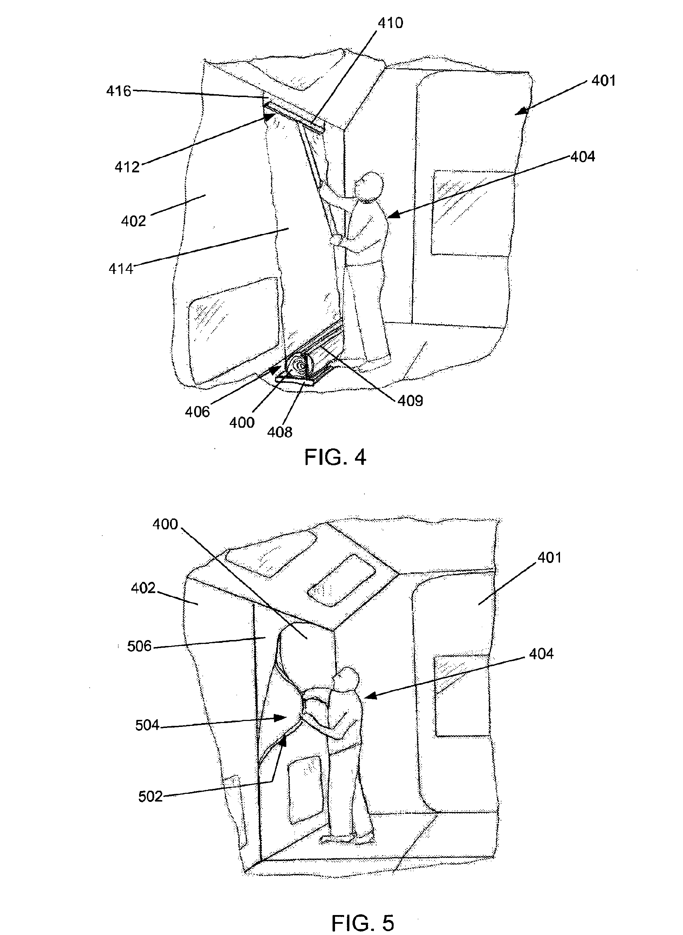

In the illustrated installation, the multilayer film coverings 116 are made of substantially translucent films and adhesives, which enables their installation over light sources, for example, the lower light-boxes 110. The structure of the multilayer film coverings 116 is provided in the description that follows relative to FIGS. 2 and 3, and an exemplary method of their installation and use is provided in the description relative to FIGS. 4 and 5.

Each of the multilayer film coverings 116 includes a pressure sensitive adhesive layer 118 exposed on a side thereof facing the lower wall surface 104 prior to installation, which enables installation onto the lower wall surface 104. Each multilayer film covering 116 is adhered to the wall either by hand or by a tool, for example, a brush, to avoid the formation of bubbles between the wall and the adhesive layer, wrinkles in the covering 116, and so forth.

The multilayer film coverings 116 are installed adjacent to one another when spanning distances that are wider than the width of the material. In one embodiment, a gap 120, for example, which can range from zero to about one inch (about 25 mm) in width, of exposed wall surface may be left along the edges of two consecutively installed multilayer film coverings 116. An additional gap 122, for example, of about two inches (about 50 mm), of exposed wall surface may be left along the top and bottom edges of the multilayer film coverings 116. The gaps 120 and 122, which together may define a border of exposed wall surface surrounding each of the multilayer film coverings 116, may be covered by a self-adhesive tape strip 124 extending over each gap 120 and 122 as well as over the edges of each multilayer film covering 116. One type of self-adhesive tape suitable for such application is a two-inch wide tape sold under P/N "BWT" by the Haldon Company of Aurora, Illinois. The tape strip 124 may be used to avoid peeling of the films under the force of the spray used within the booth.

The structure of a multilayer film covering 116 will now be described in more detail with reference to FIGS. 2 and 3, which illustrate cross sections through two adjacent multilayer film coverings 116 installed onto a wall 200. In the description that follows, structures that are the same or similar to structures previously described are denoted by the same reference numerals previously used for simplicity. As can be seen from the figures, which have been substantially enlarged to best illustrate the structures disclosed herein, each multilayer film covering 116 includes alternating layers of plastic film 202 and pressure sensitive adhesive 204. The pressure sensitive adhesive layers 204 operate to maintain adhesive engagement between adjacent plastic films 202. In one embodiment, each adhesive layer 204 is disposed between two plastic films 202, as shown, and is arranged to have a stronger bond with one of the two plastic films than it does with the other such that the adhesive layer can be removed along with the sheet when one of the plastic films is peeled off the multilayer film covering 116 exposing the plastic film previously disposed below the removed adhesive layer. Such adhesive properties may be accomplished, for example, by forming the plastic films 202 to have a smooth or glossy surface disposed outwardly and a matte surface disposed inwardly relative to the orientation of the sheet to the stack.

In general, each plastic film 202 of the stack multilayer film covering 116 is substantially identical in width with the other plastic films, and is formed of a flexible web material. A suitable material for making the plastic films is a low-density polyethylene film, which is known to have desirable properties for this application, such as resistance to tearing, resistance to chemical attack from water-based automotive paint solvents, and so forth.

The adhesive layers 204 disposed between the layers of plastic film 202 may be identical to one another in formulation and in layer thickness. The adhesive layers 204 may additionally be of the same thickness and formulation as the wall adhesive layer 118 disposed to attach the multilayer film covering 116 to the surface of the wall 200. In the illustrated embodiment, the wall adhesive layer 118 is arranged differently than the adhesive layers 204 insofar as it is made of a slightly different adhesive formulation and has a different thickness to provide improved adhesion to the wall 200 without causing separation of layers when the multilayer film covering 116 is formed in a roll for packaging, transportation, and sale to consumers.

The adhesive layers 204 disposed between the plastic films 202 are primarily made of pressure sensitive adhesive (PSA) materials that can be water or solvent based. One example of a material having desirable adhesion and tackiness is an acrylic based adhesive, for example, methacrylete, which has been rubber modified to improve tack. Another additive that may be used to improve the suitability of the adhesive for use with the multilayer film covering 116 is ethylene ethyl acrylate (EEA), which is added in moderation to improve tack without substantially increasing the hardness of the resulting adhesive compound.

The wall adhesive layer 118 may be formulated to be the same as the adhesive layers 204, or may alternatively comprise a slightly different formulation applied at a slightly increased thickness than the adhesive layers 204. One can appreciate that the layer thickness of the adhesive will depend on the overall size and millimeter (MIL) thickness of the plastic film layers. In the illustrated embodiment, the base or wall adhesive layer is made of an adhesive compound distributed by the Surface Guard Corporation of Aurora, Illinois, which is sold under the name "Surface Guard 02." The subsequent adhesive layers are made of a formulation distributed by the same company, which is sold under the name "Surface Guard 36." Both formulations are water based acrylic compounds. In general, adhesives having moderate tackiness of the type commonly used in masking tape are suitable.

In one embodiment, the plastic films 202 are formed having a smooth side and a matte side. Each plastic film 202 is assembled in a stack to form the multilayer film covering 116 with the smooth side thereof facing outward. Such arrangement aids in removing an outer adhesive layer 204 along with the outer plastic film 202 layer being peeled off the multilayer film covering 116 due to the increased adhesive engagement of the adhesive layer 204 with the matte surface of the outer plastic film 202.

In one general aspect, separation of an outer layer from the multilayer film covering 116 is facilitated by maintaining portions of the plastic film 202 layers free of adhesive. As shown in FIGS. 2 and 3, at least two opposite edges of the multilayer film covering 116 include a portion or flap 206 of the plastic film 202 that is not covered by the adhesive layer 204 or 118. The flap 206 may extend along two side edges when the multilayer film covering 116 is cut from a roll, or may extend along the entire periphery of the multilayer film covering 116 when the same is supplied in the form of a dimensional sheet.

In the illustrated embodiment, the flaps 206 may further include an optional layer of edging material 208 deposited thereon. The edging material may be any material, for example, paper or a plastic material, which can be colorless or have an identifiable color that can be seen through the transparent or translucent plastic film 202 and that is permanently bonded or otherwise connected with the plastic film 202. In one embodiment, the flaps 206 may lack any edging material and be visually identified by printing, such as part numbers and/or text, that is produced directly on the plastic film. In the absence of such edging material 208, the flaps 206 may simply consist of portions of the film lacking the adhesive layer. The flap 206 having the optional edging material 208 bonded therewith, or simply the flap 206 having no edging material, allows adjacently adhered layers of superimposed film to be identified, separated and peeled apart from others in the stack, thus removing the outer, contaminated layer and leaving the fresh layers in place. During use, the outer layers of plastic film 202 can be successively removed from the stack making up the multilayer film covering 116 in descending order until the stack is depleted.

A condition illustrating the peeling of the outer layer of plastic film 202 from the multilayer film covering 116 is illustrated in the cross section of FIG. 3. To initiate the peeling of each plastic film 202 from its adjacently attached plastic film 202, the self-adhesive tape strip 124 is removed to expose the flaps 206. It is noted that the self-adhesive tape strip 124 maintains the flaps 206 in position during use. With the tape strip 124 removed, the layers of plastic film 202 can be easily fanned apart and the single, outermost contaminated layer identified and peeled away from the stack, thus also removing any contaminants 300 having accumulated thereon.

A variety of multilayer film stack arrangements can conceivably use the peeling improvement of the present disclosure. One such arrangement would be to cover the inside of an environmentally controlled room where contaminating materials are used and must be controlled, such as an automotive paint booth. Typical protective film materials are generally long and are rolled onto a round cylinder which is convenient and practicable to custom cut the material to suit a particular situation. The multilayer film covering 116, when used as a paint booth film covering, may be formed in a roll having a width of about twelve inches (25 cm) to 120 inches (2.5 m), and a length of about 50 feet (15 m) to 1,000 feet (305 m).

In general, even though four layers of plastic film have been described thus far in making up a multilayer film covering, fewer or more than four alternating layers of plastic film and adhesive may be used. It has been found that more than ten layers used in building a multilayer film covering may introduce wrinkles when such multilayer film covering is formed into a roll. In the case, however, when the multilayer film covering is formed in flat, smaller sheets, more than ten layers may be used, for example, 500.

Illustrations of a method of applying a multi-layered sheet onto a wall surface, as well as a method of removing an outer layer thereof, specifically in the case of application in an automotive paint booth, are provided in FIGS. 4 and 5. Such novel use of multilayered film coverings to reduce the time required for periodic cleaning of enclosures is described relative to an automotive painting booth, but would be equally advantageous to other applications. Moreover, even though multilayer sheets having adhesives have been known for floor mat applications as described, for example, in U.S. Patent 4,107,811, which provides a tacky floor mat, such known multilayer arrangements would be unsuitable for the type of application provided the present disclosure insofar as the structures required for the application of the film onto a wall, or the forming of the sheet into a roll or another shape for wall application, present unique challenges, the solutions to which have not previously been contemplated.

An outline view of a portion of an enclosure 401 during application of a multilayer film covering 400 onto a wall 402 by a user 404 is shown in FIG. 4. The wall 402 is shown as a vertical wall, but the application method for the multilayer film covering 400 onto an inclined wall or ceiling would be equivalent. The multilayer film covering 400 in the illustrated embodiment is provided in the form of a roll 406, which is rotatably supported in a frame 408 placed on the floor adjacent the wall 402 during installation.

During installation, the user 404 engages an end portion of the roll 406 and begins unrolling a portion of the multilayer film covering 400 to a length that is adequate to cover the portion of the wall 402 to be coated. A guide element 408 is disposed over the roll 406 and arranged to ensure smooth unrolling of the roll 406, and optionally provide an appropriate tension to maintain the roll 406 in proper form and avoid tangling or wrinkling of the multilayer film covering 400 as it is being unrolled. In one embodiment, the user 404 may use an elongate tool 410 arranged to engage the end of the roll with a clamp (not shown) and includes a brush 412 arranged to provide uniform pressure when adhering the multilayer film covering 400 to the wall 402.

In a process of adhering the multilayer film covering 400 to the wall 402, a loose length 414 of multilayer film covering 400 is placed adjacent to the wall surface 402 by use of the tool 410 or alternatively by manual manipulation by the user 404 in a fashion similar to that used when installing wallpaper. The wall adhesive layer, which was previously described, of the multilayer film covering 400 is oriented toward the wall 402. When the multilayer film covering 400 has been extended over the area of the wall 402 to be covered, the multilayer film covering 400 may be adhered to the wall 402 gradually from the top down by use of the tool 410 or by manual manipulation by the user 404. The adhered portion 416 of the multilayer film covering 400 will ultimately span the entire portion of the wall 402 to be covered. As a final, optional step, the user 404 may cut the length of multilayer film covering 400 adhered to the wall from the roll 406, and repeat the application process in an adjacent or other portion of the wall 402. The adhered multilayer film covering 400 advantageously includes all layers thereof when initially installed, thus enabling the removal of individual, outer layers during service. A removal procedure of the multilayer film covering 400 installed in the enclosure 401 is shown in FIG. 5.

FIG. 5 is outline view of a portion of an enclosure 401 during removal of an outer layer of the multilayer film covering 400 from the wall 402. As can be seen from the figure, no tools are required for removal of the outer layer. More specifically, as described above, the multilayer film covering 400 in accordance with the disclosure includes a border of edging material 502 (which, for example, is shown in FIG. 2 and FIG. 3 and denoted by reference numeral 208) disposed along flaps of plastic sheets disposed at the edges of the multilayer film covering 400 being free of adhesive layer covering. When an outer layer 504 of the multilayer film covering 400 is removed, the user 404 may manually fan out and separate the outer layer 504 from the stack using the edging material 502 as an indication of the layers thereof. After the outer layer 504 has been identified, the user 404 may peel the outer layer 504 from the remaining layer(s) 506, discard the peeled outer layer 504, and optionally re-install self adhesive tape between adjacent portions of multilayer film covering 400 to complete the process.

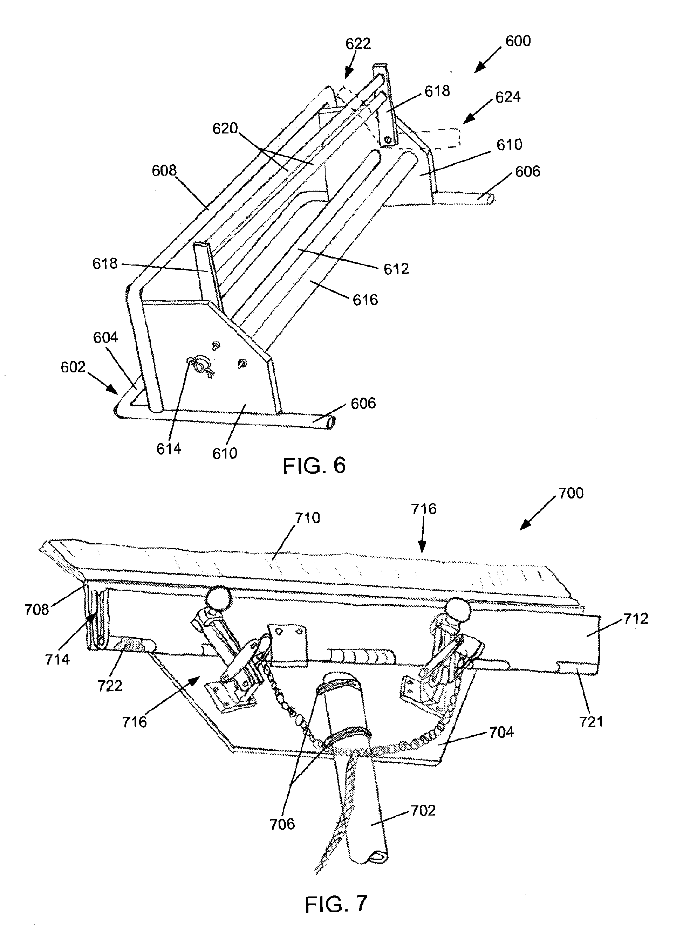

An outline view of a multilayer film dispenser 600 is shown in FIG. 6. The dispenser 600 may be used to facilitate application from the multilayer film disclosed herein, for example, as shown in FIG. 4. As described above relative to that figure, the dispenser 600 is arranged to be positioned on the floor, close to a vertical wall, so that multilayer covering may be dispensed from a roll for application onto the wall.

More specifically, the dispenser 600 includes a U-shaped base 602 having a wall side tube 604 extending along the length of the dispenser 600 and two legs 606 extending along its width. A top bar 608 includes vertical portions connected to the legs 606 and a top portion extending along the length of the dispenser 600. The position of the top bar 608 relative to the wall side tube 604 is arranged to provide a proper clearance for dispensing the multilayer film (as shown in FIG. 4) from a roll (not shown). Two side support panels 610 are connected on the two ends of the dispenser 600 between the legs 606 and the vertical portions of the top tube 608.

Two shafts extend along the length of the dispenser 600 between the two side support panels 610 for rotatably supporting a roll of film (not shown) and for directing film pulled from the roll during installation. More specifically, a roll shaft 612 is removably attached to the panels 610, for example, by a cotter pin 614, and is arranged to accommodate a roll of film disposed around a hollow mandrel (not shown). A catch bar 616 is connected to the panels 610 and extends parallel to the roll shaft 612 at a distance therefrom. During unrolling of the film roll, the catch bar 616 , which in one embodiment is a plastic tube having a rough surface, adhesively engages the film coming off the roll (not shown) such that proper tension of the roll is maintained and uncontrolled unrolling thereof is avoided.

Two extension arms 618 are pivotally connected to the panels 610 and support therebetween two cross tubes 620, which are arranged parallel to one another between the two extension arms 618. The two extension arms 618 swing in unison with the two cross tubes 620 between an upper position, which is shown in dotted line and generally denoted as 622 in FIG. 6, and a lower position, which is also shown in dotted line and generally denoted as 624. During application of multilayer film or any other rolled material onto a wall, the cross tubes at the upper position 622 position the edge of the roll for engagement, while providing a guide for cutting the dispensed portion of the roll when in the lower position 624.

A partial outline of an applicator tool 700 is shown in FIG. 7. The applicator tool 700 may be the elongate tool 410 shown and described relative to FIG. 4. The applicator tool 700 includes a handle 702, a portion of which is shown. An end of the handle 702 is connected to a frame 704 by two clamps 706 or any other suitable connection arrangement. The frame 704 is connected to a base plate 708, which includes a broom-like arrangement of bristles 710 extending along its entire width and disposed at an outer surface thereof such that they extend outward relative to the handle 702, as shown in FIG. 7.

A top plate 712 is hingeably connected to the base plate 708 and is capable of pivoting relative thereto. At least one and preferably two layers of resilient mat 714, for example, foam or grit tape, is/are disposed between the base plate 708 and the top plate 712 such that a film or sheet material may be retained therebetween then the top plate 712 abuts the base plate 708. Such functionality is useful when engaging the free end of a roll of material, such as a roll of multilayered plastic film as disclosed herein. In the illustrated embodiment, two latch arrangements 716 releasably retain the top plate 712 in pivotal engagement over the base plate 708, for example, for use while a roll of material is dispensed and positioned onto a wall surface. The latch arrangements 716 are releasable via a chain 718 connected to a rope 720 and arranged for manual disengagement by the holder of the handle 702.

When used for dispensing adhesive multilayered film as disclosed herein, it was found that binding would occur at a piano-style hinge 721 pivotally connecting the top plate 712 with the base plate 708 when a smooth straight pin (not shown) was used. Replacement of the straight pin with a threaded rod 722 extending between the aligned openings in the top plate 712 and the base plate 708 of the hinge 721 effectively eliminated such binding to improve the operation of the applicator tool 700.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Moreover, any combination of the above-described elements in all possible variations thereof is encompassed by the invention unless otherwise indicated herein or otherwise clearly contradicted by context.

## Claims

1. A multilayer film (116) for covering surfaces, in particular of a spray booth, comprising:
a base layer adapted for adhesion to a wall surface (402);
a layer of a wall adhesive (118) disposed on the base layer and configured to provide an adhesive relationship between the base layer and the wall surface (402), the wall adhesive (118) disposed over at least a portion of a wall (200) facing surface of the base layer;
a stack of removable layers disposed on the base layer, each removable layer including a layer of removable adhesive (204) disposed on an inner facing surface of each layer;
wherein an innermost removable layer of the stack is removably adhered to an outward facing surface of the base layer; and
wherein adjacent removable layers are adhered to one another by a corresponding layer of removable adhesive (204) that extends over at least a portion of each removable layer such that a flap (206) that is free of the removable adhesive (204) remains along at least two opposite peripheral edges of each removable layer;
**characterised in that**
the wall (200) facing surface of the base layer has a matte finish and the outward facing surface of the base layer has a smooth or gloss finish, and/or an inner facing surface of each removable layer has a matte finish and an outward facing surface of each removable layer has a smooth or gloss finish.

2. The multilayer film (116) of claim 1, further including an edging strip disposed along the flap (206) of each removable layer, wherein each removable layer is made of a transparent material and wherein the edging strip is opaque such that the edging strip of the outermost removable layer of the stack is visible.

3. The multilayer film (116) of claim 2, wherein each the outermost removable layer of the stack is configured to be removed from the stack when pulled by its edge, wherein the remaining layers of the stack are configured to remain in the stack as the outermost layer is removed, and wherein the outermost layer of removable adhesive (204) is configured to be removed from the stack along with the outermost removable layer.

4. The multilayer film (116) of one of the preceding claims, wherein the base layer and each of the plurality of removable layers are made of low-density polyethylene.

5. The multilayer film (116) of one of the preceding claims, wherein each layer of removable adhesive (204) is made of a pressure sensitive adhesive material that is water or solvent based,
wherein preferably the pressure sensitive adhesive material is one of methacrylate, which has been modified to improve tackiness by addition of an appropriate amount of at least one of rubber and ethylene ethyl acrylate, and wherein the wall adhesive (118) is made of a water-based acrylic compound.

6. The multilayer film (116) of one of the preceding claims, wherein the base layer and the plurality of removable layers are in a roll (406) that is adapted to be cut into segments configured to suit specific installation surface dimensions, preferably the roll (406) is adapted to be selectively cut into segments, each segment being configured to be mounted onto the wall surface (402) of an enclosure (401) adjacent to other segments.

7. The roll (406) of claim 6, wherein when the roll (406) is in a rolled state, the wall adhesive (118) of the base layer is removably adhered to an outermost surface of the stack.

8. The roll (406) of one of claims 6 to 7, wherein the flaps (206) extend along each of the two outer edges of the roll (406).

9. A method for removing soil and/or debris adhered to interior surfaces of an enclosure (401), comprising:
providing a multilayer film covering (116) that is adhered onto at least one wall surface (402) of the enclosure (401), the multilayer film covering (116) comprising:
a base layer adapted for adhesion to the wall surface (402);
a layer of a wall adhesive (118) disposed on the base layer and configured to provide an adhesive relationship between the base layer and the wall surface (402), the wall adhesive (118) disposed over at least a portion of a wall (200) facing surface of the base layer;
a stack of removable layers disposed on the base layer, each removable layer including a layer of removable adhesive (204) disposed on an inner facing surface of each layer;
wherein an innermost removable layer of the stack is removably adhered to an outward facing surface of the base layer; and wherein adjacent removable layers are adhered to one another by a corresponding layer of removable adhesive (204) that extends over at least a portion of each removable layer such that a flap (206) that is free of the removable adhesive (204) remains along at least two opposite peripheral edges of each removable layer;
selectively peeling an outermost removable layer from the stack, which may have the soil and/or debris deposited thereon, by pulling on a portion of the flap (206) of the outermost layer to expose a subsequent, clean layer of the stack,
**characterised in that**
the wall (200) facing surface of the base layer has a matte finish and the outward facing surface of the base layer has a smooth or gloss finish, and/or an inner facing surface of each removable layer has a matte finish and an outward facing surface of each removable layer has a smooth or gloss finish.

10. The method of claim 9, further comprising repeating the step of selectively peeling the outermost removable layer of the stack while the stack has not been depleted.

11. The method of one of claims 9 to 10, further comprising selectively peeling an adjacent outermost removable layer from an additional multilayer film covering (116) provided on an adjacent wall surface (402) of the enclosure (401) and preferably further comprising selectively peeling an elongate tape (124) disposed in removable adhesive relationship between adjacent outermost flaps (206) on the adjacent multilayer film coverings (116), and reapplying a new elongate tape segment to overlap the flaps (206) of the adjacent subsequent layers, which are now the outermost layers of the stacks, after the original outermost layers have been removed from the stacks.

12. The method of one of claims 9 to 11, further comprising installing the multilayer film covering (116) onto the wall surface (402) by adhering a multilayer film covering (116) segment onto the wall surface (402) and preferably further comprising cutting a segment of the multilayer film covering (116) from a roll (406), wherein the segment is adapted to have an appropriate dimension for installation onto the wall surface (402).

## Patentansprüche

1. Mehrschichtige Folie (116) zum Abdecken von Flächen, insbesondere einer Sprühkabine, die umfasst:
eine Trägerschicht, die zum Ankleben an einer Wandfläche (402) eingerichtet ist;
eine Schicht aus Wand-Klebstoff (118), die auf der Trägerschicht angeordnet und so gestaltet ist, dass sie eine Haftbeziehung zwischen der Trägerschicht und der Wandfläche (402) herstellt, wobei der Wand-Klebstoff (118) über wenigstens einem Teil einer einer Wand (200) zugewandten Fläche der Trägerschicht angeordnet ist;
eine Anordnung ablösbarer Schichten, die auf der Trägerschicht angeordnet ist, wobei jede ablösbare Schicht eine Schicht aus ablösbarem Klebstoff (204) enthält, die an einer nach innen gewandten Fläche jeder Schicht angeordnet ist;
wobei eine am weitesten innenliegende ablösbare Schicht der Anordnung ablösbar an einer nach außen gewandten Fläche der Trägerschicht angeklebt ist; und
aneinandergrenzende ablösbare Schichten über eine entsprechende Schicht aus ablösbarem Klebstoff (204) aneinandergeklebt sind, die sich über wenigstens einen Teil jeder ablösbaren Schicht so erstreckt, dass eine Lasche (206), die frei von dem ablösbaren Klebstoff (204) ist, an wenigstens zwei einander gegenüberliegenden äußeren Rändern jeder ablösbaren Schicht verbleibt;
**dadurch gekennzeichnet, dass**
die der Wand (200) zugewandte Fläche der Trägerschicht eine matte Oberfläche hat und die nach außen gewandte Fläche der Trägerschicht eine glatte oder glänzende Oberfläche hat und/oder eine nach innen gewandte Fläche jeder ablösbaren Schicht eine matte Oberfläche hat und eine nach außen gewandte Fläche jeder ablösbaren Schicht eine glatte oder glänzende Oberfläche hat.

2. Mehrschichtige Folie (116) nach Anspruch 1, die des Weiteren einen Kantenstreifen enthält, der entlang der Lasche (206) jeder ablösbaren Schicht angeordnet ist, wobei jede ablösbare Schicht aus einem transparenten Material besteht und der Kantenstreifen undurchsichtig ist, so dass der Kantenstreifen der am weitesten außen liegenden ablösbaren Schicht der Anordnung sichtbar ist.

3. Mehrschichtige Folie (116) nach Anspruch 2, wobei die am weitesten außen liegende ablösbare Schicht der Anordnung jeweils so gestaltet ist, dass sie von der Anordnung abgelöst wird, wenn sie an ihrer Kante gezogen wird, die verbleibenden Schichten der Anordnung so gestaltet sind, dass sie in der Anordnung verbleiben, wenn die am weitesten außen liegende Schicht abgelöst wird, und die am weitesten außen liegende Schicht des ablösbaren Klebstoffs (204) so gestaltet ist, dass sie zusammen mit der am weitesten außen liegenden ablösbaren Schicht abgelöst wird.

4. Mehrschichtige Folie (116) nach einem der vorangehenden Ansprüche, wobei die Trägerschicht und jede der Vielzahl ablösbarer Schichten aus Polyethylen niedriger Dichte bestehen.

5. Mehrschichtige Folie (116) nach einem der vorangehenden Ansprüche, wobei jede Schicht aus ablösbarem Klebstoff (204) aus druckempfindlichem Klebstoffmaterial auf Wasser- oder Lösungsmittelbasis besteht,
und das druckempfindliche Klebstoffmaterial vorzugsweise Methacrylat ist, das modifiziert worden ist, um die Haftfähigkeit durch Zusatz einer geeigneten Menge an Gummi oder/und Ethylenethylacrylat zu verbessern, und der Wand-Klebstoff (118) aus einer Acrylverbindung auf Wasserbasis besteht.

6. Mehrschichtige Folie (116) nach einem der vorangehenden Ansprüche, wobei die Trägerschicht und die Vielzahl ablösbarer Schichten eine Rolle (406) bilden, die so eingerichtet ist, dass sie in Segmente geschnitten wird, die spezifischen Installationsflächen-Abmessungen entsprechen, und vorzugsweise die Rolle (406) so eingerichtet ist, dass sie selektiv in Segmente geschnitten wird und jedes Segment so gestaltet ist, dass es an der Wandfläche (402) eines Raums (401) an andere Segmente angrenzend angebracht wird.

7. Rolle (406) nach Anspruch 6, wobei, wenn sich die Rolle (406) in einem zusammengerollten Zustand befindet, der Wand-Klebstoff (118) der Trägerschicht ablösbar an einer am weitesten außen liegenden Fläche der Anordnung angeklebt ist.

8. Rolle (406) nach einem der Ansprüche 6 bis 7, wobei sich die Laschen (206) an jeder der zwei Außenkanten der Rolle (406) entlang erstrecken.

9. Verfahren zum Entfernen von Verschmutzungen und/oder Rückständen, die an Innenflächen eines Raums (401) haften, wobei es umfasst:
Bereitstellen einer mehrschichtigen Folienabdeckung (116), die an wenigstens einer Wandfläche (402) des Raums (401) angeklebt wird, wobei die mehrschichtige Folienabdeckung (116) umfasst:
eine Trägerschicht, die zum Ankleben an einer Wandfläche (402) eingerichtet ist;
eine Schicht aus Wand-Klebstoff (118), die auf der Trägerschicht angeordnet und so gestaltet ist, dass sie eine Haftbeziehung zwischen der Trägerschicht und der Wandfläche (402) herstellt, wobei der Wand-Klebstoff (118) über wenigstens einem Teil einer einer Wand (200) zugewandten Fläche der Trägerschicht angeordnet ist;
eine Anordnung entfernbarer Schichten, die auf der Trägerschicht angeordnet ist, wobei jede entfernbare Schicht eine Schicht aus ablösbarem Klebstoff (204) enthält, die an einer nach innen gewandten Fläche jeder Schicht angeordnet ist;
wobei eine am weitesten innenliegende ablösbare Schicht der Anordnung ablösbar an einer nach außen gewandten Fläche der Trägerschicht angeklebt ist; und
aneinandergrenzende ablösbare Schichten über eine entsprechende Schicht aus ablösbarem Klebstoff (204) aneinandergeklebt sind, die sich über wenigstens einen Teil jeder ablösbaren Schicht so erstreckt, dass eine Lasche (206), die frei von dem ablösbaren Klebstoff (204) ist, an wenigstens zwei einander gegenüberliegenden äußeren Rändern jeder ablösbaren Schicht verbleibt;
selektives Abziehen einer am weitesten außen liegenden ablösbaren Schicht von der Anordnung, an der sich möglicherweise die Verunreinigung und/oder Rückstände abgelagert haben, durch Ziehen an einem Abschnitt der Lasche (206) der am weitesten außen liegenden Schicht, um eine folgende saubere Schicht der Anordnung freizulegen,
**dadurch gekennzeichnet, dass**
die der Wand (200) zugewandte Fläche der Trägerschicht eine matte Oberfläche hat und die nach außen gewandte Fläche der Trägerschicht eine glatte oder glänzende Oberfläche hat und/oder eine nach innen gewandte Fläche jeder ablösbaren Schicht eine matte Oberfläche hat und eine nach außen gewandte Fläche jeder ablösbaren Schicht eine glatte oder glänzende Oberfläche hat.

10. Verfahren nach Anspruch 9, das des Weiteren umfasst, dass der Schritt des selektiven Abziehens der am weitesten außen liegenden ablösbaren Schicht der Anordnung wiederholt wird, solange die Anordnung nicht verbraucht ist.

11. Verfahren nach einem der Ansprüche 9 bis 10, das des Weiteren umfasst, dass selektiv eine angrenzende am weitesten außen liegende ablösbare Schicht von einer zusätzlichen mehrschichtigen Folienabdeckung (116) abgezogen wird, die sich an einer angrenzenden Wandfläche (402) des Raums (401) befindet, und das vorzugsweise des Weiteren umfasst, dass selektiv ein längliches Band (124) abgezogen wird, das in einer ablösbaren haftenden Beziehung zwischen aneinandergrenzenden am weitesten außen liegenden Laschen (206) an den aneinandergrenzenden mehrschichtigen Folienabdeckungen (116) angeordnet ist, und ein neues Segment des länglichen Bandes wieder so aufgebracht wird, dass es die Laschen (206) der aneinandergrenzenden folgenden Schichten überlappt, die nunmehr die am weitesten außen liegenden Schichten der Anordnungen sind, nachdem die ursprünglichen am weitesten außen liegenden Schichten von den Anordnungen abgelöst worden sind.

12. Verfahren nach einem der Ansprüche 9 bis 11, das des Weiteren umfasst, dass die mehrschichtige Folienabdeckung (116) an der Wandfläche (402) installiert wird, indem ein Segment der mehrschichtigen Folienabdeckung (116) an die Wandfläche (402) geklebt wird, und das vorzugsweise des Weiteren umfasst, dass ein Segment der mehrschichtigen Folienabdeckung (116) von einer Rolle (406) abgeschnitten wird, wobei das Segment so eingerichtet ist, dass es eine geeignete Abmessung zur Installation an der Wandfläche (402) hat.

## Revendications

1. Film multicouche (116) pour recouvrir des surfaces, en particulier d'une cabine de peinture, comprenant ;
une couche de base adaptée pour une adhésion à une surface de paroi (402) ;
une couche d'adhésif de paroi (118) disposée sur la couche de base et configurée pour procurer un lien adhésif entre la couche de base et la surface de paroi (402), l'adhésif de paroi (118) étant disposé sur au moins une partie d'une surface de la couche de base faisant face à la paroi (200) ;
un empilement de couches amovibles disposées sur la couche de base, chaque couche amovible comportant une couche d'adhésif amovible (204) disposée sur une surface de chaque couche faisant face à l'intérieur ;
dans lequel la couche amovible la plus interne de l'empilement est collée de façon amovible à une surface faisant face à l'extérieur de la couche de base ; et
dans lequel des couches amovibles adjacentes sont collées les unes aux autres par une couche correspondante d'adhésif amovible (204) qui s'étend sur au moins une partie de chaque couche amovible de telle sorte qu'un rabat (206) qui ne comporte pas d'adhésif amovible (204) reste le long d'au moins deux bords périphériques opposés de chaque couche amovible ;
**caractérisé en ce que**
la surface faisant face à la paroi (200) de la couche de base présente une finition mate et la surface faisant face à l'extérieur de la couche de base présente une finition lisse ou brillante, et/ou une surface faisant face à l'intérieur de chaque couche amovible présente une finition mate et une surface faisant face à l'extérieur de chaque couche amovible présente une finition lisse ou brillante.

2. Film multicouche (116) selon la revendication 1, comprenant en outre une bande de bord disposée le long du rabat (206) de chaque couche amovible, dans lequel chaque couche amovible est constituée d'un matériau transparent et dans lequel la bande de bord est opaque, de telle sorte que la bande de bord de la couche amovible la plus externe de l'empilement est visible.

3. Film multicouche (116) selon la revendication 2, dans lequel chacune des couches amovibles les plus externes de l'empilement est configurée pour être enlevée de l'empilement quand elle est tirée par son bord, dans lequel les couches restantes de l'empilement sont configurées pour rester dans l'empilement lorsque la couche la plus externe est enlevée, et dans lequel la couche la plus externe d'adhésif amovible (204) est configurée pour être enlevée de l'empilement conjointement avec la couche amovible la plus externe.

4. Film multicouche (116) selon l'une des revendications précédentes, dans lequel la couche de base et chaque couche de la pluralité de couches amovibles sont constituées de polyéthylène basse densité.

5. Film multicouche (116) selon l'une des revendications précédentes, dans lequel chaque couche d'adhésif amovible (204) est constituée d'un matériau adhésif sensible à la pression à base d'eau ou de solvant,
dans lequel le matériau adhésif sensible à la pression est de préférence un méthacrylate qui a été modifié pour améliorer son adhésivité par addition d'une quantité appropriée d'au moins un composé parmi le caoutchouc et l'éthylène-acrylate d'éthyle, et dans lequel l'adhésif de paroi (118) est constitué d'un composé acrylique à base d'eau.

6. Film multicouche (116) selon l'une des revendications précédentes, dans lequel la couche de base et la pluralité de couches amovibles sont conformées en un rouleau (406) qui est adapté pour être coupé en segments configurés pour s'adapter à des dimensions de surface d'installation spécifiques, et le rouleau (406) est de préférence adapté pour être sélectivement découpé en segments, chaque segment étant configuré pour être monté sur la surface de paroi (402) d'une enceinte (401) adjacente à d'autres segments.

7. Rouleau (406) selon la revendication 6 dans lequel, quand le rouleau (406) est à l'état enroulé, l'adhésif de paroi (118) de la couche de base est collé de façon amovible à la surface la plus externe de l'empilement.

8. Rouleau (406) selon l'une des revendications 6 et 7, dans lequel les rabats (206) s'étendent le long de chacun des deux bords externes du rouleau (406).

9. Procédé pour enlever de la salissure et/ou des débris collés à des surfaces intérieures d'une enceinte (401), comprenant :
la fourniture d'un revêtement à film multicouche (116) qui est collé sur au moins une surface de paroi (402) de l'enceinte (401), le revêtement à film multicouche (116) comprenant :
une couche de base adaptée pour une adhésion à la surface de paroi (402) ;
une couche d'adhésif de paroi (118) disposée sur la couche de base et configurée pour fournir un lien adhésif entre la couche de base et la surface de paroi (402), l'adhésif de paroi (118) étant disposé sur au moins une partie d'une surface de la couche de base faisant face à la paroi (200) ;
un empilement de couches amovibles disposées sur la couche de base, chaque couche amovible comportant une couche d'adhésif amovible (204) disposée sur une surface de chaque couche faisant face à l'intérieur ;
dans lequel une couche amovible la plus interne de l'empilement est collée de façon amovible à une surface de la couche de base faisant face à l'extérieur ;
et dans lequel des couches amovibles adjacentes sont collées les unes aux autres par une couche correspondante d'adhésif amovible (204) qui s'étend sur au moins une partie de chaque couche amovible, de telle sorte qu'un rabat (206) qui ne comporte pas d'adhésif amovible (204) reste le long d'au moins deux bords périphériques opposés de chaque couche amovible ;
pelage sélectif d'une couche amovible la plus externe de l'empilement sur laquelle de la salissure et/ou des débris peuvent être déposés, en tirant sur une partie du rabat (206) de la couche la plus externe pour exposer une couche subséquente propre de l'empilement,
**caractérisé en ce que**
la surface faisant face à la paroi (200) de la couche de base présente une finition mate et la surface faisant face à l'extérieur de la couche de base présente une finition lisse ou brillante, et/ou une surface faisant face à l'intérieur de chaque couche amovible présente une finition mate et une surface faisant face à l'extérieur de chaque couche amovible présente une finition lisse ou brillante.

10. Procédé selon la revendication 9, comprenant en outre la répétition de l'étape de pelage sélectif de la couche amovible la plus externe de l'empilement tant que l'empilement n'a pas été épuisé.

11. Procédé selon l'une des revendications 9 et 10, comprenant en outre le pelage sélectif d'une couche amovible la plus externe adjacente d'un revêtement à film multicouche additionnel (116) pourvu sur une surface de paroi adjacente (402) de l'enceinte (401), et comprenant en outre préférablement le pelage sélectif d'une bande allongée (124) disposée en liaison adhésive amovible entre des rabats les plus externes adjacents (206) sur les revêtements de film multicouche adjacents (116), et la réapplication d'un nouveau segment de bande allongée pour recouvrir les rabats (206) des couches subséquentes adjacentes, qui sont maintenant les couches les plus externes des empilements, après que les couches les plus externes originales ont été enlevées des empilements.

12. Procédé selon l'une des revendications 9 à 11, comprenant en outre l'installation du revêtement à film multicouche (116) sur la surface de paroi (402) en collant un segment de revêtement à film multicouche (116) sur la surface de paroi (402), et comprenant en outre préférablement la découpe d'un segment du revêtement à film multicouche (116) d'un rouleau (406), dans lequel le segment est adapté de manière à présenter une dimension appropriée pour son installation sur la surface de paroi (402).
